# EUROPÄISCHE PATENTSCHRIFT

(11) **EP 1 111 285 B1**
(45) Veröffentlichungstag und Bekanntmachung des Hinweises auf die Patenterteilung: **12.07.2006**
(21) Anmeldenummer: 00119987.6
(22) Anmeldetag: 14.09.2000
(51) Int. Cl.: F16L 3/24

(54) **Halter**
Holder
Support

(30) Priorität: 23.12.1999 DE 29922731 U; 27.01.2000 DE 20001497 U
(43) Veröffentlichungstag der Anmeldung: 27.06.2001
(73) Patentinhaber: Poppe GmbH & Co. KG, D-35392 Giessen (DE)
(72) Erfinder: Gruber, Lothar, 35260 Stadtallendorf (DE)
(74) Vertreter: Böck, Bernhard

(56) Entgegenhaltungen:
- EP-A- 0 602 548
- WO-A-93/00202
- NL-A- 7 009 698
- SE-A- 439 270
- US-A- 3 818 659

## Beschreibung

Die Erfindung betrifft einen Halter, insbesondere für eine oder mehrere Leitungen oder andere Baugruppen, mit einem Unterteil, mit welchem der Halter an einer Wand oder einem weiteren Bauteil befestigbar ist, und mit einem Oberteil mit zumindest einer Aufnahme für die Leitungen oder die Baugruppen.

Ein derartiger Halter ist beispielsweise in Dokument US3818659 offenbart.

Derartige Halter werden insbesondere beim Automobilbau verwendet, um verschiedenste Leitungen, z.B. Stromkabel, an der Karosserie zu befestigen. An die Halter werden dabei hohe Anforderungen gestellt, was die Haltbarkeit und die dauerhafte Verbindung zwischen Leitung und Halter einerseits und Halter und Karosserie andererseits angeht. Außerdem dürfen die Leitungen in dem Halter nicht scheuern, da sonst die Leitungen beschädigt werden und es zu Defekten am Fahrzeug kommen kann. Des Weiteren sollen die Halter möglichst einfach mit der Karosserie verbindbar sein. Ebenso einfach soll auch die Leitung in dem Halter festgelegt werden können. Vorteilhaft hat sich dabei gezeigt, dass der Teil des Halters, welcher mit der Karosserie verbunden ist, aus einem Duroplast oder einem Thermoplast besteht, während der Teil des Halters, welcher mit der Leitung verbunden ist, aus einem Elastomer, insbesondere aus Gummi besteht. Ein derartiger mehrkomponentiger Halter, dessen Oberteil aus einem Elastomer und dessen Unterteil aus einem Duroplast oder einem Thermoplast besteht, ist jedoch nur unter sehr hohem Aufwand herstellbar.

Der Erfindung liegt daher die Aufgabe zugrunde, einen Halter vorzuschlagen, welcher einfach herstellbar ist und gleichzeitig die Vorteile eines Oberteils aus einem Elastomer und eines Unterteils aus einem Duroplast oder einem Thermoplast hat.

Diese Aufgabe wird dadurch gelöst, dass das Ober- und das Unterteil des Halters lösbar miteinander verbunden sind und dass das Oberteil aus Gummi oder einem thermoplastischen Elastomer besteht. Das Ober- und das Unterteil können so getrennt voneinander hergestellt werden, und sie werden erst danach zusammengesetzt und miteinander verbunden.

Erfindungsgemäß kann dabei das Unterteil aus einem Kunststoff bestehen und im Spritzguss herstellbar sein.

Gemäß der Erfindung kann das Unterteil einen Widerhaken aufweisen, mit welchem das Unterteil in einer komplementären Ausnehmung der Wand oder des Bauteils befestigbar ist.

Erfindungsgemäß sind an dem Unterteil Befestigungsmittel vorgesehen, mit welchen das Unterteil mit dem Oberteil verbunden ist. Die Aufnahme für die Leitungen weist gemäß der Erfindung auf der dem Unterteil zugewandten Seite des Oberteils eine Öffnung auf, und das Unterteil verschließt diese Öffnung der Aufnahme. Nachdem also das Unterteil des Halters an der Wand befestigt ist, kann nun die Leitung in die Aufnahme des Oberteils eingesetzt und das Ober- anschließend mit dem Unterteil verbunden werden. Dabei wird automatisch die Öffnung der Aufnahme in dem Oberteil verschlossen.

Dazu sind auf der dem Oberteil zugewandten Seite des Unterteils zwei Haken angebracht, welche beiderseits der Öffnung der Aufnahme für die Leitungen in Aussparungen des Oberteils eingreifen. Gemäß der Erfindung können die Haken Rastelemente aufweisen, welche hinter oder in die Aussparungen eingreifen.

Besonders einfach herzustellen sind Oberteile, die Abschnitte von Strangpressprofilen sind. Daher ist es vorteilhaft, wenn die Oberteile des Halters Abschnitte eines extrudierten Profiles sind.

Um die Dämpfungseigenschaften des Halters zu verbessern, können vorteilhaft auf der Wandung der Aufnahme Noppen oder Rippen vorgesehen sein.

Zwei Ausführungsbeispiele sind anhand der Zeichnung näher beschrieben. Darin zeigt
- Fig. 1: das Unterteil eines ersten Halters,
- Fig. 2: das zu dem Unterteil gehörige Oberteil,
- Fig. 3: einen Zusammenbau von Unter- und Oberteil,
- Fig. 4: einen zweiten Halter.

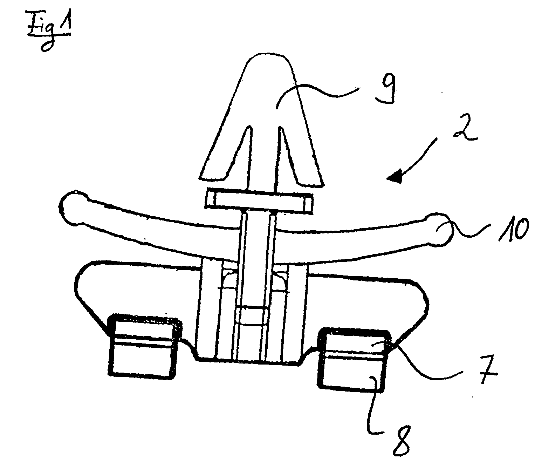

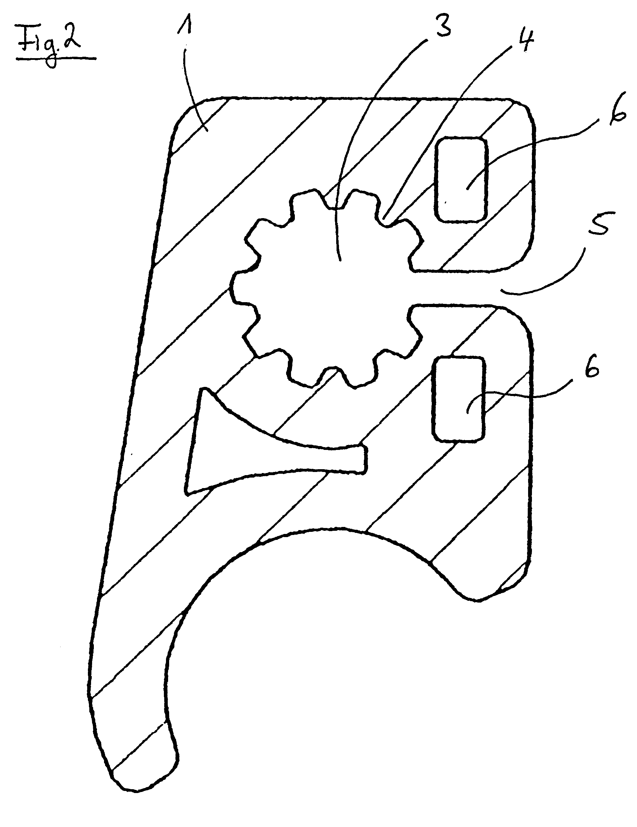

Das in Fig. 1 dargestellte Unterteil 2 des Halters weist einen Widerhaken 9 auf, mit welchem das Unterteil 2 in einem Schlitz einer Autokarosserie eingeklipst werden kann. Um die Halterung des Unterteils 2 in der Autokarosserie zu verbessern, ist unterhalb des Widerhakens 9 ein Federelement 10 vorgesehen, dessen Enden in Richtung des Widerhakens 9 gebogen sind. Wird nun das Unterteil 2 in der Autokarosserie eingeklipst, bewirkt das Federelement 10 eine stabile und spielfreie Verbindung zwischen der Autokarosserie und dem Halter. Auf der dem Oberteil 1 zugewandten Seite des Unterteiles 2 sind Haken 7 vorgesehen, an deren Enden Rastelemente 8 angebracht sind. Diese Haken 7 korrespondieren mit Aussparungen 6 des Oberteils 1 des Halters (Fig. 2). Zwischen diesen beiden Aussparungen 6 ist eine Öffnung 5 für eine Aufnahme 3 für Leitungen vorgesehen. Da das Oberteil 1 aus Gummi besteht, kann die Öffnung 5 aufgebogen werden, um die Leitung in die Aufnahme 3 einzulegen. Wird nun das Oberteil 1 mit dem Unterteil 2 verbunden, werden also die Haken 7 in die Aussparungen 6 eingeschoben und mit den Rastelementen 8 verrastet und die Öffnung 5 der Aufnahme 3 verschlossen. Die Leitung ist so gegen das Herausfallen aus dem Halter gesichert. Die Rastelemente 8 an den Haken 7 verhindern dabei, dass sich die Verbindung zwischen dem Ober- und Unterteil 1, 2 durch Vibrationen löst und sich so auch die Öffnung 5 der Aufnahme 3 öffnen kann. Die Wandung der Aufnahme 3 ist mit Rippen 4 ausgekleidet, so dass eine verbesserte Dämpfung der Lagerung der Leitung in der Aufnahme 3 bewirkt wird.

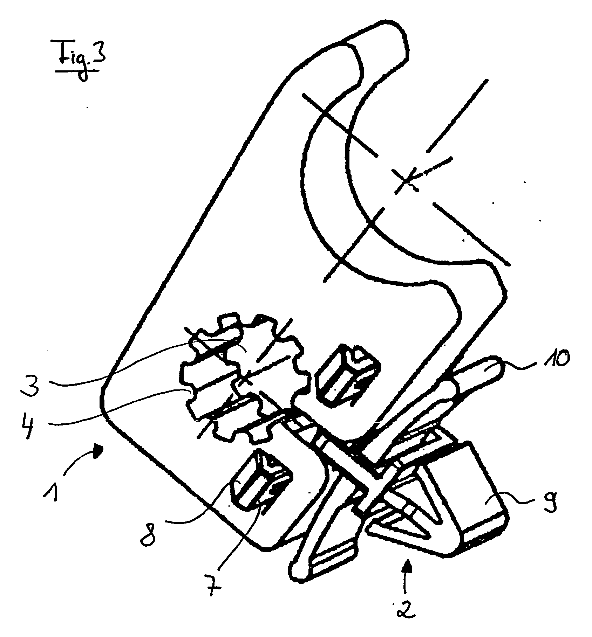

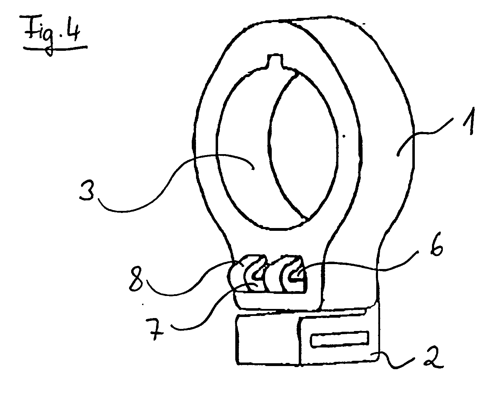

Im Gegensatz zu dem in den Fig. 1 bis 3 dargestellten Halter weist der Halter gemäß Fig. 4 keine Öffnung 5 für die Aufnahme auf. Vielmehr muss hier die Baugruppe - es handelt sich hierbei um einen Halter für einen Aktivkohle-filter - seitlich in die Aufnahme 3 des Oberteils 2 eingesetzt werden. Die Verbindung zwischen dem Oberteil 1 und dem Unterteil 2 des Halters wird jedoch auf die gleiche Art und Weise erzielt. Es sind wiederum Aussparungen 6 vorgesehen, in die mit Rastelementen 8 versehene Haken 9 des Unterteils 2 eingreifen.

Der Vorteil der verwendeten Oberteile 1 ist, dass diese einen gleichmäßigen Querschnitt haben. Damit können die Oberteile 1 besonders einfach durch Extrudieren hergestellt werden. Die Oberteile 1 sind dann Abschnitte, die von einem extrudierten Profil abgeschnitten werden. Die Unterteile 2 der Halter werden vorteilhaft im Spritzgießverfahren hergestellt.

### Bezugszeichenliste

- 1: Oberteil
- 2: Unterteil
- 3: Aufnahme
- 4: Rippen
- 5: Öffnung der Aufnahme
- 6: Aussparungen
- 7: Haken
- 8: Rastelemente
- 9: Widerhaken
- 10: Federelemente

## Patentansprüche

1. Halter insbesondere für eine oder mehrere Leitungen oder andere Baugruppen mit einem Unterteil, mit welchem der Halter an einer Wand oder an einem weiteren Bauteil befestigbar ist, und mit einem Oberteil mit zumindest einer Aufnahme für die Leitungen oder die Baugruppen, wobei das Ober- und das Unterteil lösbar miteinander verbunden sind und die Aufnahme auf der dem Unterteil zugewandten Seite des Oberteils eine Öffnung aufweist wobei das Unterteil auf der dem Oberteil zugewandten Seite zwei Haken aufweist, welche beiderseits der Öffnung der Aufnahme in Aussparungen des Oberteils eingreifen
**dadurch gekennzeichnet,**
**dass** das Oberteil aus Gummi oder einem thermoplastischen Elastomer besteht, und **dass** das Unterteil die Öffnung der Aufnahme des Oberteils verschließt.

2. Halter nach Anspruch 1, **dadurch gekennzeichnet, dass** das Unterteil (2) aus Kunststoff besteht und im Spritzguß herstellbar ist.

3. Halter nach Anspruch 1 oder 2, **dadurch gekennzeichnet, dass** das Unterteil (2) einen Widerhaken (9) aufweist, mit welchem das Unterteil (2) in einer komplementären Ausnehmung der Wand oder des weiteren Bauteils befestigbar ist.

4. Halter nach einem der Ansprüche 1 bis 3, **dadurch gekennzeichnet, dass** an dem Unterteil (2) Befestigungsmittel (7) vorgesehen sind, mit welchen das Unterteil (2) mit dem Oberteil (1) verbunden ist.

5. Halter nach Anspruch 4, **dadurch gekennzeichnet, dass** die Haken (7) Rastelemente (8) aufweisen, die hinter oder in die Aussparungen greifen.

6. Halter nach einem der Ansprüche 1 bis 5, **dadurch gekennzeichnet, dass** das Oberteil (1) ein Abschnitt eines extrudierten Profiles ist.

7. Halter nach einem der Ansprüche 1 bis 6, **dadurch gekennzeichnet, dass** die Wandungen der Aufnahmen (3) mit Noppen oder Rippen (4) versehen sind.

## Claims

1. A holder, particularly for one or more lines or other assemblies, comprising a lower part with which the holder may be fixed to a wall or to another component, and an upper part with at least one receptacle for the lines or the assemblies, the upper and the lower part being releasably joined together and the receptacle having an opening on the side of the upper part directed towards the lower part, the lower part having on the side directed towards the upper part two hooks which engage on both sides of the opening of the receptacle into cut-outs of the upper part,
**characterised in that** the upper part is made of rubber or a thermoplastic elastomer, and **in that** the lower part closes the opening of the receptacle of the upper part.

2. A holder according to Claim 1, **characterised in that** the lower part (2) is made of plastics material and may be manufactured by injection moulding.

3. A holder according to Claim 1 or 2, **characterised in that** the lower part (2) has a barb (9) with which the lower part (2) may be fixed in a complementary recess of the wall or of the other component.

4. A holder according to one of Claims 1 to 3, **characterised in that** on the lower part (2) there are provided fixing means (7) with which the lower part (2) is joined to the upper part (1).

5. A holder according to Claim 4, **characterised in that** the hooks (7) have detent elements (8) which engage behind or into the cut-outs.

6. A holder according to one of Claims 1 to 5, **characterised in that** the upper part (1) is a portion of an extruded profile.

7. A holder according to one of Claims 1 to 6, **characterised in that** the walls of the receptacles (3) are provided with knobs or ribs (4).

## Revendications

1. Dispositif de support en particulier pour un ou plusieurs câbles ou autres composants, comportant une partie inférieure avec laquelle le dispositif de support peut être fixé sur une paroi ou autre élément, et une partie supérieure avec au moins un logement pour les câbles ou les composants, les parties supérieure et inférieure étant reliées l'une avec l'autre de manière détachable, le logement présentant une ouverture sur le côté de la partie supérieure tourné vers la partie inférieure et la partie inférieure présentant sur le côté tourné vers la partie supérieure deux crochets qui pénètrent de part et d'autre de l'ouverture du logement dans des évidements de la partie supérieure, **caractérisé en ce que** la partie supérieure est faite de caoutchouc ou d'un élastomère thermoplastique et que la partie inférieure obture l'ouverture du logement de la partie supérieure.

2. Dispositif de support selon la revendication 1, **caractérisé en ce que** la partie inférieure (2) est faite de matière plastique et peut être fabriquée par moulage par injection.

3. Dispositif de support selon la revendication 1 ou 2, **caractérisé en ce que** la partie inférieure (2) présente un ardillon (9) avec lequel la partie inférieure (2) peut être fixée dans un évidement complémentaire de la paroi ou d'un autre élément.

4. Dispositif de support selon une des revendications 1 à 3, **caractérisé en ce que** sur la partie inférieure (2) sont prévus des moyens de fixation (7) avec lesquels la partie inférieure (2) est reliée avec la partie supérieure (1).

5. Dispositif de support selon la revendication 4, **caractérisé en ce que** les crochets (7) présentent des éléments d'encliquetage (8) qui pénètrent derrière ou dans les évidements.

6. Dispositif de retenue selon une des revendications 1 à 5, **caractérisé en ce que** la partie supérieure (1) est un segment d'un profilé extrudé.

7. Dispositif de retenue selon une des revendications 1 à 6, **caractérisé en ce que** les parois des logements (3) sont dotées de boutons ou de nervures (4).
